Europäisches Patentamt

European Patent Office

Office européen des brevets

(11) Publication number: 0 364 002 A2

(12) **EUROPEAN PATENT APPLICATION**

(21) Application number: 89122064.2

(22) Date of filing: 14.11.85

(51) Int. Cl.5: **B62D 49/06 , B62D 49/02 , B62D 49/00**

(30) Priority: 15.11.84 NL 8403484

(43) Date of publication of application:
18.04.90 Bulletin 90/16

(60) Publication number of the earlier application in
accordance with Art.76 EPC: 0 182 437

(84) Designated Contracting States:
DE FR GB NL

(71) Applicant: C. van der Lely N.V.
Weverskade 10 P.O. Box 26
NL-3155 ZG Maasland(NL)

(72) Inventor: van der Lely, Cornelis
7 Brüschenrain
Zug(CH)

(74) Representative: Mulder, Herman et al
Octrooibureau Van der Lely N.V. Weverskade
10 P.O. Box 26
NL-3155 ZG Maasland(NL)

(54) A tractor.

(57) The invention relates to an agricultural tractor
having at least one engine for driving land wheels of
the tractor as well as at least one lifting device for
coupling implements to the tractor and at least one
power take-off shaft. The tractor is provided with
front wheels which are hingeably mounted to the
tractor frame in such a way that the distances be-
tween the front wheels will be changeable.

FIG.2

EP 0 364 002 A2

Xerox Copy Centre

## A TRACTOR

The invention relates to a tractor, more specifically an agricultural tractor, having at least one engine for driving one or more wheels of the tractor, at least one lifting device for coupling implements to the tractor, as well as at least one power take-off shaft.

Known tractors of this type have the disadvantage that they are not always suitable to efficiently perform important operations such as preparing and sowing fields. For these operations, a normal commercially available tractor, which requires a high-power engine for performing all common operations, including for example ploughing, is too heavy. To drive soil tilling implements , a tractor does not require a great power relative to its total performance. Because of its great weight, the known, standard tractor spoils the soil structure, as a result of which plants develop to a less satisfactory extent and the yield becomes unsatisfactory.

Apart from this, the manoeuvrability of the tractor, especially at the head end of the field, is not sufficient. It is an object of the invention to provide a tractor with improved steering facilities.

According to the invention, the front wheels of the tractor are hingeably mounted to the tractor frame in such a way that the distance between the front wheels will be changeable.

The invention will now be described in greater detail by way of example with reference to the following Figures.

Figure 1 is a side elevational view of a first embodiment of a tractor according to the invention.

Figure 2 is a plan view along the arrow II in Figure 1.

Figure 3 is a front view along the line III - III in Figure 1.

Figure 4 is a view along the line IV - IV in Figure 1.

Figure 5 is a view along the line V - V in Figure 1.

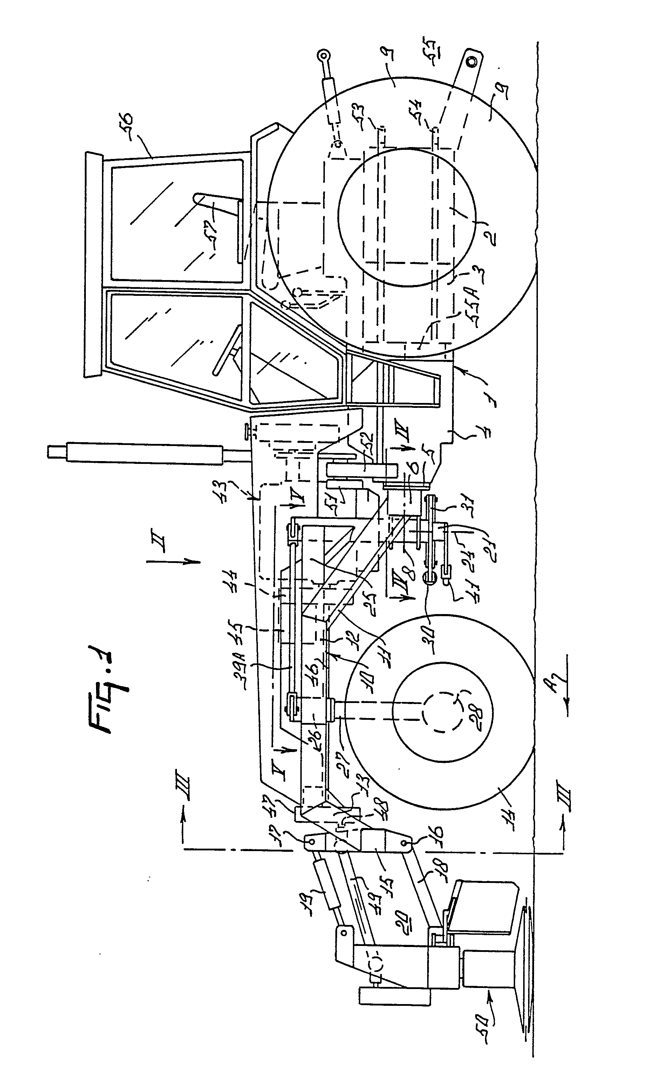

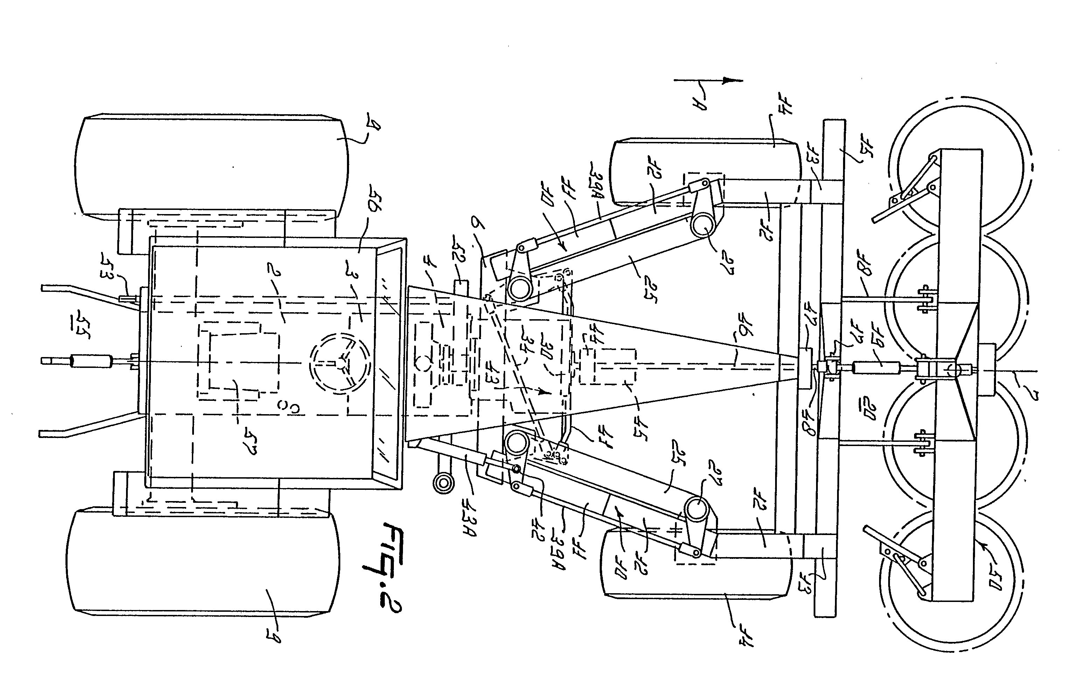

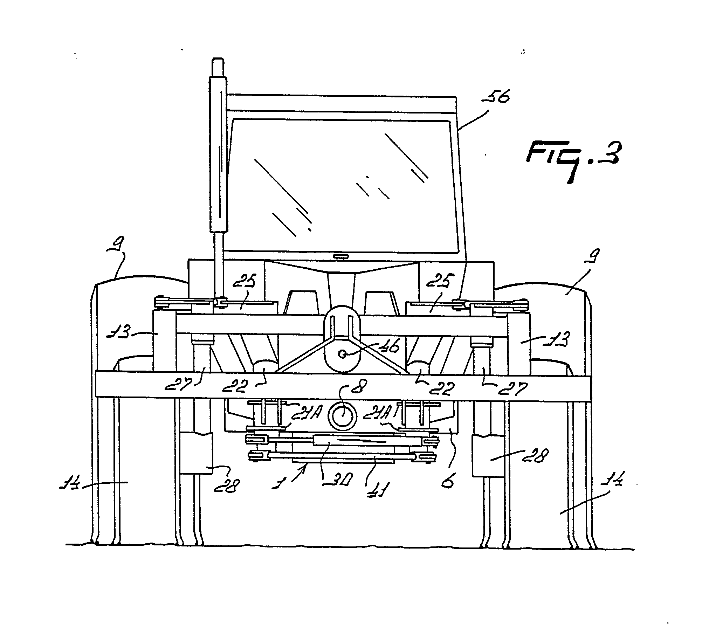

A frame 1 of the tractor shown in the Figures 1 -5 is constituted by the housings of a differential and rear axle housing 2 of a gear box 3 fitted to the front thereof, and of a first drive engine 4 fastened to the front of said gear box, all this seen in the direction of travel A. The frame portions 2 to 4 are preferably constituted by standard production parts of large-scale produced tractors of the middle class having a capacity of, for example, approximately 70 kW. These standard parts have the advantage that their prices are comparatively low as these parts are produced in large quantities and moreover are comparatively light, as said parts need generate, or convey, only a comparatively low power. A radial bearing, by means of which a beam 6 is supported capable of swivelling around a horizontal swivel axle 8 located in the vertical longitudinal symmetry plane 7 (Figure 2) of the tractor, is fitted to the front of the engine 4. The beam 6 extends transversely of the direction of travel A and, if the tractor stands on a flat plane, is in a horizontal direction. The beam 6 is constituted by a hollow cylindrical beam, is arranged symmetrically relative to the symmetry plane 7 and extends to approximately the plane defining the inner sides of the rear wheels fitted to the rear axle housing 2. The front part of the tractor is fastened to the beam 6, this part consequently being capable of swivelling around the swivel axle 8 relative to the frame 1 associated with the rearmost portion.

A portal structure which, in a side elevational view, is approximately in the shape of an arc, is rigidly fastened at each of the two ends of the beam 6; the two portal structures 10 are of a symmetrical construction relative to the symmetry plane 7. From each end of the beam 6, a hollow beam section 11 of the portal structure 10 extends obliquely in a forward, an upward and also an outward direction, which beam - seen in the forward direction - passes into a hollow cylindrical beam 12 which is directed approximately horizontally and in parallel with the symmetry plane 7, the beam 12 passing into a hollow cylindrical beam section 13 which is likewise directed in parallel with the symmetry plane 7 and inclines downwards from the beam 12. Seen in the side elevational view shown in Figure 1, the whole of the portal structure 10 is located outside the circumference of front wheels 14, still further to be described, and curves around the circumference of the upper portion of the front wheels 14. The two beams 13 of the structure 10 are rigidly interconnected by means of a hollow cross-beam 15, which is arranged parallel to the beam 6. Remote from the symmetry plane 7, lower connecting points 16 and near the symmetry plane 7 an upper connecting point 17 for two lower lifting arms 18 and an upper arm 19 of a front three-point lifting device 20 are provided on the cross-beam 15. Seen in the lateral direction (plan view in accordance with Figure 2), the beams 12 and 13 are disposed near the vertical symmetry plane of the rear wheel 9 located at the same side of the plane 7. The beams 11 of the structure 10 are arranged such relative to the direction of travel A that they are mutually divergent (Figure 2).

At both sides of the symmetry plane 7, seen in the direction of travel A, two vertically, spaced-apart bearings 21A are fastened to the front of the beam 6, these two bearings 21A supporting two pipes which are coaxially disposed one around the other in a mutually rotatable manner and in the vertical direction. The coinciding centre lines of the two pipes 21 and 22 are denoted by reference numeral 24 (Figures 1, 4 and 5). The centre line 24 of each pair of pipes 21 and 22 points upwards and approximately vertically. Each individual pipe 21 and 22 is arranged capable of swivelling relative to the other pipe and also relative to the pair of bearings 21. The pipes 21 and 22 are disposed near the front of the beam 6 and near the inside of the beam 11 of the portal structure 10. The inner pipe has its bottom side and also its top side projecting from the top and bottom sides, respectively, of the outer pipe.

Near the upper end of each outer pipe 22 an approximately horizontal beam 25, which extends in the forward direction direction, is rigidly connected to the outer circumference of this pipe, each beam 25 supports one of the front wheels 14 preceding it at some distance. As each beam 25 is rigidly fastened to one of the pipes 22 and the latter is capable of rotation with the beam 6 around the swivel axle 8, the two front wheels are freely swivable around the swivel axle 8 relative to the frame 1 of the rear portion of the tractor.

At its front side, each supporting beam 25 has a bush 26 in which an upwardly directed wheel carrier 27 is disposed, capable of swivelling, around an upwardly directed shaft. By means of its lower side, each wheel carrier 27 supports a hydraulic engine which is capable of driving the relevant front wheel 14. Each supporting beam 25, together with the associated front wheel 14, is consequently capable of rotation around the centre line 24, relative to the beam 6 and the frame 1, since the pipe 22 is capable of swivelling around the centre line 24 relative to these parts. Seen in the side elevational view shown in Figure 1, the bottom of each supporting beam 25 is present at least in the region of the bottom side of the beam 12 of the portal structure 10, so that in the event of steering wheel movement the front wheels 14 are not obstructed by these parts.

Each of the two pipes located on either side of the symmetry plane 7 has at its front and its bottom a lug 29 which extends forwards in the horizontal direction. The foremost ends of the lugs 29 are interconnected capable of swivelling via a hydraulic cylinder 30, which is operable from the driver's seat in the tractor. The hydraulic cylinder 30 extends horizontally and approximately perpendicularly to the symmetry plane 7 (Figures 2, 3 and 5).

Near its bottom, one of the two pipes 22 is provided with a lug 31 located in the extension of the lug 29 belonging to that pipe, but extends from the pipe 29 in the opposite direction, so to the rear.

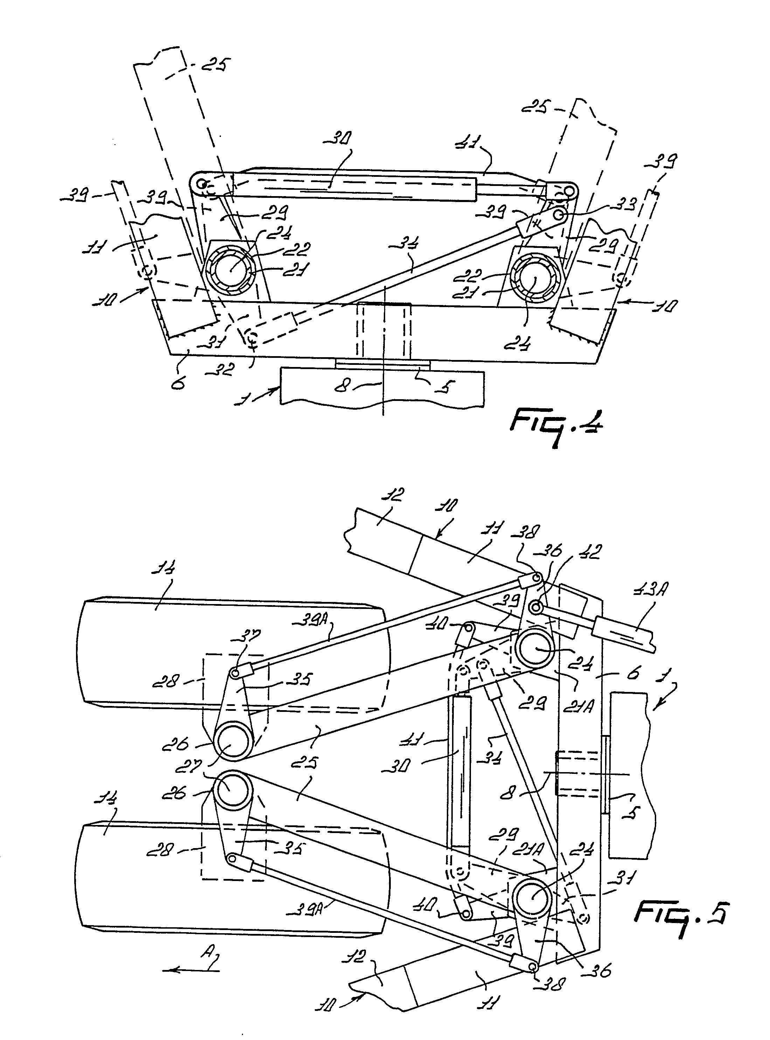

The rearmost end of the lug 31 has a swivel axle 32. The pipe 22 located at the other side of the symmetry plane 7 is not provided with such a lug 31. In the lug 29 of the last-mentioned pipe 32 a swivel axle 33 is disposed at a short distance behind the swivable connection of the hydraulic cylinder 30 (Figure 4). The spacing between the swivel axle 33 and the centre line 24 of the associated pipe 22 is equal to the spacing between the swivel axle 32 and the swivel axle 24 of the pipe 22 located at the other side of the symmetry plane 7. The lug 29 in which the swivel axle 33 is disposed and the lug 31 in which the swivel axle 32 is disposed are coupled to each other by means of a coupling rod 34 coupling the motions of the two pipes 22. As shown in Figure 4 or Figure 5, the centre line of the coupling rod 34 intersects the plane enclosing the two centre lines 24.

If now the hydraulic cylinder 30 is energized from the driver's seat and the piston rod of this cylinder moves in our out of the cylinder housing itself, the two beams 25 will move to each other or from each other by means of their fronts, hinging around the associated centre lines 24, and consequently also the two front wheels 14 will move in a similar way, however, fully symmetrically relative to the longitudinal symmetry plane 7; this always symmetrical arrangement of the front wheels 14 is realized by the presence of the coupling rod 34. Thus it is possible to change the track width of the two front wheels at the driver's option, the tractor being in motion.

A horizontally, outwardly extending lug 35 is fastened to the top of each of the two wheel carriers 27, while a lug 36 of the same dimensions and extending in the same direction as the lug 35 is fastened to that end of each pipe 21 projecting above the pipe 22. The ends of the two lugs 35 and 36 are each provided with upward swivel axles 37 and 38, respectively, which are coupled by a coupling rod 39. Seen in the view shown in Figure 5, the swivel axles 37 and 38, the centre line 24 of the pipe 21 and the centre line of the wheel carrier 27 form the vertices of a parallelogram, so that in swivelling of pipe 21 through a certain angle the wheel carrier 27 and the associated wheel 14 swivel through the same angle. A lug 39 which extends to the front and whose end is provided with a vertical swivel axle 40 is fitted to the bottom end of each pipe 21. The structure, dimensions and directions of the lugs 39 are indentical. The two swivel axles 40 are intercoupled by means of a rod 41, which is directed horizontally and approximately perpendicularly to the symmetry plane 7. In accordance with the plan view shown in Figure 4 or in Figure 5, the two swivel axles 40 and the two centre lines 24 form the vertices of a swivable parallelogram construction. Each lug 36 is provided with a swivel axle 42 located between the pipe 21 and the associated swivel axle 38. The approximately vertical swivel axle 42 has for its object to bearing-support the free end of the piston rod of a hydraulic cylinder 43A (Figure 2), the cylinder of which itself is fitted capable of swivelling by means of a ball joint, relative to the frame 1. If the cylinder 43 is operated from the driver's seat, the lugs 36 and 35 and also the associated wheel 14 will be swivelled through a certain angle, while the lug 36 and 35 and the associated wheel 14, located at the other side of the symmetry plane 7, will be coupled such, by means of the rod 41 that the two front wheels 14 have the same steering wheel movement. The several dimensions have been chosen such, that the front wheels 14 are capable of swiveling around the centre lines of the associated wheel carriers 27 through an angle of approximately 65° to both one side and the other side (so through a total angle of approximately 130°), from the appropriate position for driving straight. Then a position of the front wheels can be obtained in which the centre lines of the front wheels, in plan view, intersect a point at one side of the tractor located near the outer side of one of the rear wheels 9. It is consequently possible for the tractor to be rotated entirely around said last swivel point; if this is effected at the end of a tilled strip of field, it is possible, after the tractor has been turned around, to achieve that the tractor is in the appropriate position for tilling the field strip contiguous to the tilled strip of field, without the need for manoeuvring on the head-end of the field. This is particularly important for preparing a seed bed and sowing the field.

It should be noted that increasing or reducing the track width of the front wheels 14 by means of the hydraulic cylinder 30 occurs absolutely independently of the steering of the front wheels 14. If, for example, considered from the position shown in Figure 5, the hydraulic cylinder 30 is operated so as to increase the track width of the front wheels 14, the two beams 25 will swivel symmetrically away from each other in the above-described manner, but the inner pipes 21 and the steering construction 35 to 39 fastened thereto will remain in their positions.

The tractor includes a second drive engine 43, whose crank shaft, which extends approximately in the direction of travel A, is located approximately in the symmetry plane 7. The engine 43 - as will be apparent from Figure 1 and considered in the direction of travel A - is arranged at least predominantly in front of and at angle above the first drive engine 4, near the front portion of the tractor and behind the front axis determined by the rotary axis of the front wheels 14. In this embodiment, the second drive engine 43 also has a power of approximately 70 kW and may be of a structure identical to the engine 4 and be of the same production series. The engine 43 can be fastened to the frame 1, but it is alternatively possible for the engine 43 to be fastened to the front portion of the tractor, which is swivable relative to the frame 1 around the swivel axle 8. A reduction gear box 44, which comprises a clutch operable by the driver, is fitted to the front of the engine 43. Dependent on the purposes set to the tractor, there may be fitted to the front of the engine 43 a hydraulic pump 45 drivable by this engine and being hydraulically coupled to the hydraulic engines 28 of the front wheels 14. This hydraulic coupling to the front wheels can be of a construction which allows its switch-on and switch-off from the driver's seat.

At its front the reduction gear box 44 has an outgoing shaft to which a forwardly-extending drive axle 46 is coupled, whose foremost end is in drivable connection, by means of a possibly changeable gear box 47, with a front power take-off shaft 48 of the tractor which, by means of an intermediate shaft 49 is capable of driving an agricultural machine 50 coupled to the foremost lifting device 20, with a speed of rotation of approximately 540 and/or 1000 revs/minute and which is supported by the frame 1 of the tractor by means of the gear box 47. The power take-off shaft drive 44, 46, 47, 48 is - as can be seen from Figure 1 - located substantially above the lowermost boundary of the portal structure 10, so that the swivability of the front wheels 14 is not impeded.

At its rear side, the second drive engine 43 is provided with a clutch 51 directly attached to the frame 1, which clutch, via a possibly changeable reduction gear box 52, can drive a rear power take-off shaft 53 mounted relative to the housing 2 of the frame 1 with a speed of rotation of approximately 540 and/or 1000 revs/minute. The gear box 52 extends from the outgoing shaft of the second engine 43 at a downward angle and outwardly, so that the power take-off shaft 53 is passed along one of the sides of the frame 1. Consequently, the power take-off shaft 53 is located at one side and remote from the symmetry plane 7. The clutch 51, as also the clutch 44, is operable from the driver's seat. In addition to the rear power take-off shaft 53 the tractor has a second rear power take-off shaft 54, which is located in the symmetry plane 7 and is drivable by the first engine 4 via a clutch 55A which is also operable from the driver's seat. The rear power take-off shaft 54 forms part of the standard components 2, 3, 4 such as they are mass-produced for a commercially available tractor. The latter also applies to a rear three-point lifting device 55 of the tractor.

In this embodiment the two engines are arranged approximately symmetrically relative to the symmetry plane 7.

During operation, the rear wheels 9 are driven by the first drive engine 4 in a manner customary for normal, middle-class commercial tractors, the drive torque being applied by means of the gear box 3 to be operated by the driver, to the differential and the rear axle housing 2. The second drive engine 43, which, as also the first drive engine 4, has a power of, for example, approximately 70 kW and in principle may be of an identical structure (although this is not imperative), drives during operation the rear power take-off shaft 53 via the clutch 51 and the gear wheel transmission 52, and by means of the gear wheel transmission and clutch 44 drives the shaft 46, the gear box 47 and the front power take-off shaft 48. The second drive engine 43 can also drive the hydraulic pump 45 which - if so desired - can drive the hydraulic engines 28 and consequently the front wheels 14 via a hydraulic connection, not shown. This last-mentioned drive of the front wheels 14 is, however, not necessary in all circumstances. In known manner, the hydraulic pump 45 has an adjustable yield, which can be set from the driver's seat. If it is no longer necessary to drive the front wheels 14, the pump 45 can be set to "0" yield, as a result of which the entire power of the second drive engine 43 becomes available for driving the rear power take-off shaft 53 and the front power take-off shaft 48. This is of particular importance for feeding or preparing the seed bed of agricultural soil, for which no heavy tractive forces of the tractor are required, but wherein because of the presence of the second drive engine 43, a power of a defined maximum value is always available for driving machines coupled to the front lifting device 20 and to the rear lifting device 55, such as, for example, rotary harrows, rotary cultivators etc. For machines of such a type a power of approximately 70 kW is sufficient. This maximum power of the second drive engine 43 is not affected by the tractive force required by the tractor, supplied by the separate first drive engine 4. However, in a modified embodiment, it is also possible that the second engine 43 is capable of driving only a front power take-off shaft or a rear power take-off shaft.

For preparing the seed bed and seeding the field, a high-power, commercially available tractor (which power is required for large tractive forces, for example for ploughs) is too heavy. In addition, the axles, the gear box and other parts are adapted to this high power and consequently do not only have a heavy weight, but such drives are also comparatively expensive since the size of the series in which these heavy tractors are built, is comparatively small. Because of the high weight, these tractors spoil the soil structure, so that the crops develop less advantageously and the yield becomes unsatisfactory. By starting from a comparatively light tractor structure 2, 3, 4 an in principle light tractor is obtained, which at a power of approximately 70 kW can have a weight of approximately 4500 kgs, whilst because of the presence of the second engine of approximately 70 kW a total power of approximately 140 kW is available. As the weight of the second engine and its drives is approximately 500 kgs, the total weight of the tractor is significantly reduced compared with a tractor having a single engine with a power of approximately 140 kW. The soil structure is not adversely affected by the tractor according to the invention, and the yield of the crops is greater. In addition, the mechanical main parts are comparatively cheap because they are obtained from large-scale production runs and are of a relatively light construction.

By operating the hydraulic cylinder 30 a front wheel 14 located at some distance before an approximately vertical swivel axle 24 can be swivelled inwards or outwards, respectively in a simple way to change the track width of the front wheels. By coupling these swivel actions by means of the coupling rod 34, a symmetrical movement of the front wheels 14 is obtained in all instances. In an innermost position of the front wheels shown in Figure 5, the wheel mark of these wheels 14 is fully within the wheel mark of the rear wheels 9 (track width approximately 75 cms). This is important, more specifically for seeding and preparing for seeding of the soil, and thus the pressure of the tractor on the soil is distributed over the overall working width of the soil tilling machine. The disadvantage of the soil being pressed by a wheel and thereafter being further pressed by another wheel is prevented thus. If on the other hand the front wheels, after having swivelled around the swivel axle 24, are moved to an outermost position (track width approximately 230 cms), the vertical symmetry planes of the front wheels 14 and the rear wheels 9 approximately coincide. This is advantageous during, for example, mowing operations, in which operations a mower which extends along the entire width of the machine (Figure 2) may be attached to the front lifting device 20. The mower, driven by the second drive engine 43 is then capable of moving through its swath within the front and rear wheels, without a wheel travelling over the swath. This position is furthermore suitable for row cultures.

The innermost position of the front wheels 14 with the narrowest track width has, as mentioned already in the foregoing, significance for preserving the soil structure during sowing or preparing of the seed bed. This combines with the comparatively light weight of the tractor, as then the pressure per non-recurrently driven wheel mark is as low as possible. As the front wheels together are capable of free swivelling relative to the frame 1 around the centre line, it is achieved in all circumstances that both front wheels bear on the soil with the same pressure, so that in the case of an uneven field, the soil in the wheel mark of the front wheels is prevented from being locally depressed with a force which might possibly increase to twice this force if the wheels were rigidly fastened relative to the frame 1.

By operating the hydraulical cylinder 43A, the two front wheels 14 are swivelled to the same extent around the centre line of the associated wheel carriers 27 because of the presence of the rod 41, which couples the wheel rotation. Because of the afore-mentioned large wheel movement of not more than approximately 130˚, the tractor can be rotated around a point located near the outer side of one of the tractor wheels. Because of the steering structure in the form of a parallelogram of the front wheels 14, it is accomplished that the position of the front wheels during a change of their track width remains the same for a blocked hydraulic cylinder 43A. Vice versa, steering the front wheels 14 does not improve the track width of these wheels in the event of a blocked hydraulic cylinder 30.

The driver further has a driver's cabin 56, which - seen in the side elevational view of Figure 1 - is predominantly mounted over the rear wheels 9, so that the driver, who is seated in a driver's seat 57, has a good view of the implements fastened to the lifting device 55 and also of the implements fastened to the front lifting device 20. Also the setting of the track width of the front wheels 14 can be judged from the driver's seat 57, as the symmetrically arranged second engine 43 does not impede a proper view of this engine (cf. Figure 2).

In this embodiment the track width is adjustable from approximately 230 cms to approximately 75 cms. The rear wheels 9 have a diameter of approximately 160 cms and a width of approximately 60 cms, whilst in this embodiment the front wheels 14 have a diameter of approximately 120 cms and a width of approximately 40 to 60 cms.

## Claims

1. A tractor, more specifically an agricultural tractor, having at least one engine (4, 58) for driving one or more wheels (9) of the tractor, at least one lifting device (20, 55, 80, 89) for coupling implements to the tractor, as well as at least one power take-off shaft (54), characterized in that the front wheels (14) of the tractor are hingeably mounted to the tractor frame in such a way that the distance between the front wheels will be changeable.

2. A tractor as claimed in claim 1, characterized in that the front wheels (14) are steerable wheels.

3. A tractor as claimed in claim 1 or 2, characterized in that the position of the front wheels (14) can be adjusted to be in the track of the rear wheels (9) or between the track of the rear wheels (9).

4. A tractor as claimed in any one of the preceding claims, characterized in that the rear wheels (14) are displaceable with the aid of a hydraulic ram (30).

5. A tractor as claimed in any one of the preceding claims, characterized in that the tractor is provided with at least one parallelogram construction destined to alter the width of the front wheels (14).

6. A tractor as claimed in any one of the preceding claims, characterized in that the front wheels (14) are power driven.

7. A tractor as claimed in claim 6, characterized in that the front wheels (14) are driven by hydraulic motors.

FIG.1

FIG.2

FIG.3

EP 0 364 002 A2

FIG.4

FIG.5